# EUROPEAN PATENT APPLICATION

(11) **EP 4 772 826 A1**
(43) Date of publication of application: **08.07.2026**
(21) Application number: 24859650.4
(22) Date of filing: 23.08.2024
(51) Int. Cl.: G01B 7/16

(54) **CAPACITIVE SENSOR**

(30) Priority: 01.09.2023 JP 2023142038
(71) Applicant: Nitto Denko Corporation, Ibaraki-shi Osaka 567-8680 (JP)
(72) Inventor: HOSOYA, Akihiro, Ibaraki-shi, Osaka 567-8680 (JP); FURUTA, Kenji, Ibaraki-shi, Osaka 567-8680 (JP)
(74) Representative: Hoffmann Eitle
(86) International application number: PCT/JP2024/030032
(87) International publication number: WO 2025/047617

(57) **Abstract**

A structure in which a plurality of sensor elements are formed into a same sheet shape can be simplified. An electrostatic capacitance sensor (1) including a dielectric layer (20), a ground layer (21), and a voltage application layer (22) has a wiring section (11) in which the ground layer (21) and the voltage application layer (22) are stacked with the dielectric layer (20) so that positions thereof in a stacking direction do not overlap with each other, and an electrostatic capacitance section that is a section extending from an end portion in a surface direction of the wiring section (11), in which the ground layer (21) and the voltage application layer (22) are stacked with the dielectric layer (20) between them.

## Description

### Technical Field

The present invention relates to an electrostatic capacitance sensor.

### Background Art

For example, in torsion sensors that detect strain in a torsional direction that is applied to objects to be detected such as a bar, electrostatic capacitance types of sensors are known. The electrostatic capacitance sensors each include an electrostatic capacitance section obtained by forming a pair of electrode layers on the surface of a dielectric layer. In the electrostatic capacitance sensor that is used as a torsion sensor, the electrostatic capacitance section detects change in electrostatic capacitance caused by torsion that occurs in the object to be detected (see Patent Literatures 1 and 2, for example).

### Document List

### Patent Literatures

Patent Literature 1: Japanese Patent No. 4242977
Patent Literature 2: Japanese Patent No. 5907220

### Summary of Invention

### Technical Problem

Incidentally, for example, when an electrostatic capacitance sensor is attached to an object to be detected in which a ratio of a height dimension to a diameter dimension is high such as a long, thin round bar, if the components of the sensor (sensor elements), including an electrostatic capacitance section overlap with each other, the thickness of the sensor elements that overlap with each other will increase, and wear and deterioration of the electrostatic capacitance sensor will easily progress by an external force. Consequently, in order to prevent the sensor elements from overlapping with each other in the state of being attached to an object to be detected, it is desirable to form the electrostatic capacitance section so that the electrostatic capacitance section extends in an oblique direction with respect to a longitudinal direction of the object to be detected in the state of being attached to the object to be detected, in the electrostatic capacitance sensor.

On the other hand, when the plurality of sensor elements are formed to be on the same sheet in the electrostatic capacitance sensor, it is also required to achieve improvement in processibility, or achieve reduction in thickness of the sensor elements to improve attachability to the object to be detected, by simplifying the stacking structure of the sensor elements.

The present invention is intended to solve the problem described above as an example, and an object of the present invention is to provide an electrostatic capacitance sensor with which it is possible to simplify the structure in which the plurality of sensor elements are formed into the same sheet shape.

### Solution to Problem

In order to achieve the above-described object, an electrostatic capacitance sensor according to the present invention is an electrostatic capacitance sensor including a dielectric layer, a first electrode layer, and a second electrode layer, and has a wiring section in which the first electrode layer and the second electrode layer are stacked with the dielectric layer so that positions thereof in a stacking direction do not overlap with each other, and an electrostatic capacitance section that is a section extending from an end portion in a surface direction of the wiring section, in which the first electrode layer and the second electrode layer are stacked with the dielectric layer between them.

In the electrostatic capacitance sensor according to one aspect of the present invention, a plurality of the electrostatic capacitance sections are provided for the one wiring section.

In the electrostatic capacitance sensor according to one aspect of the present invention, wherein the plurality of the electrostatic capacitance sections are disposed symmetrically with the wiring section at a center in the surface direction.

In the electrostatic capacitance sensor according to one aspect of the present invention, the electrostatic capacitance section extends at an angle from the end portion in the surface direction of the wiring section.

In the electrostatic capacitance sensor according to one aspect of the present invention, in the wiring section, the dielectric layer has the first electrode layer stacked on one surface, and has the second electrode layer stacked on another surface.

In the electrostatic capacitance sensor according to one aspect of the present invention, wherein the electrostatic capacitance section is disposed at an angle to a longitudinal direction of an object to be detected.

### Effects of Invention

With the electrostatic capacitance sensor according to the present invention, it is possible to simplify the structure in which the plurality of sensor elements are formed into the same sheet shape.

### Brief Description of Drawings

[Fig. 1] Fig. 1 is a plan view schematically showing a configuration of an electrostatic capacitance sensor according to an embodiment of the present invention.
[Fig. 2] Fig. 2 is a sectional view taken along line A-A in the electrostatic capacitance sensor shown in Fig. 1.
[Fig. 3] Fig. 3 is a sectional view taken along line B-B in the electrostatic capacitance sensor shown in Fig. 1.
[Fig. 4] Fig. 4 is a plan view showing a dielectric layer in the electrostatic capacitance sensor shown in Fig. 1.
[Fig. 5] Fig. 5 is a plan view showing a ground layer in the electrostatic capacitance sensor shown in Fig. 1.
[Fig. 6] Fig. 6 is a plan view showing a voltage application layer in the electrostatic capacitance sensor shown in Fig. 1.
[Fig. 7] Fig. 7 is a plan view showing an insulation layer in the electrostatic capacitance sensor shown in Fig. 1.
[Fig. 8] Fig. 8 is a schematic diagram showing a capacitor equivalent to the electrostatic capacitance sensor shown in Fig. 1.
[Fig. 9] Fig. 9 is a schematic diagram showing an example of an electrostatic capacitance measurement circuit using the electrostatic capacitance sensor shown in Fig. 1.
[Fig. 10] Fig. 10 is a schematic view showing an electrostatic capacitance section in a state in which the electrostatic capacitance sensor shown in Fig. 1 is attached to an object to be detected.
[Fig. 11] Fig. 11 is another schematic view showing the electrostatic capacitance section in a state in which the electrostatic capacitance sensor shown in Fig. 1 is attached to an object to be detected.

### Description of Embodiments

Hereinafter, an electrostatic capacitance sensor 1 according to an embodiment of the present invention will be described with reference to the drawings.

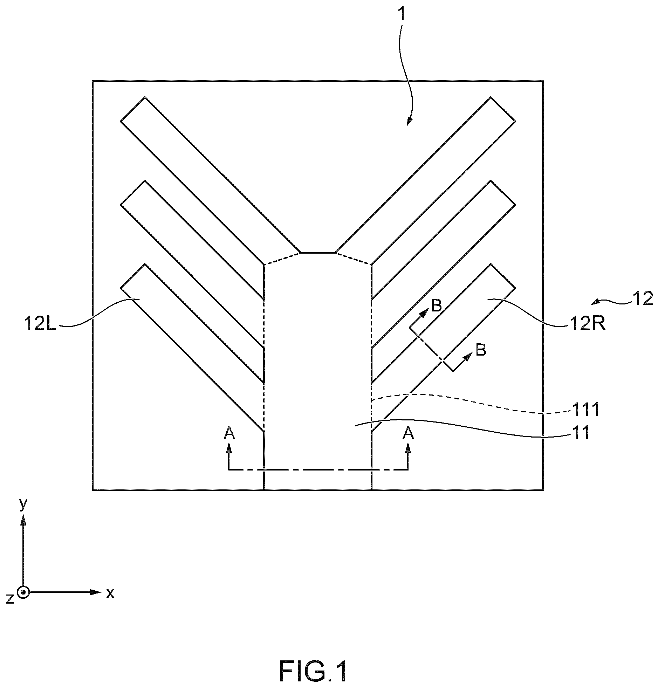

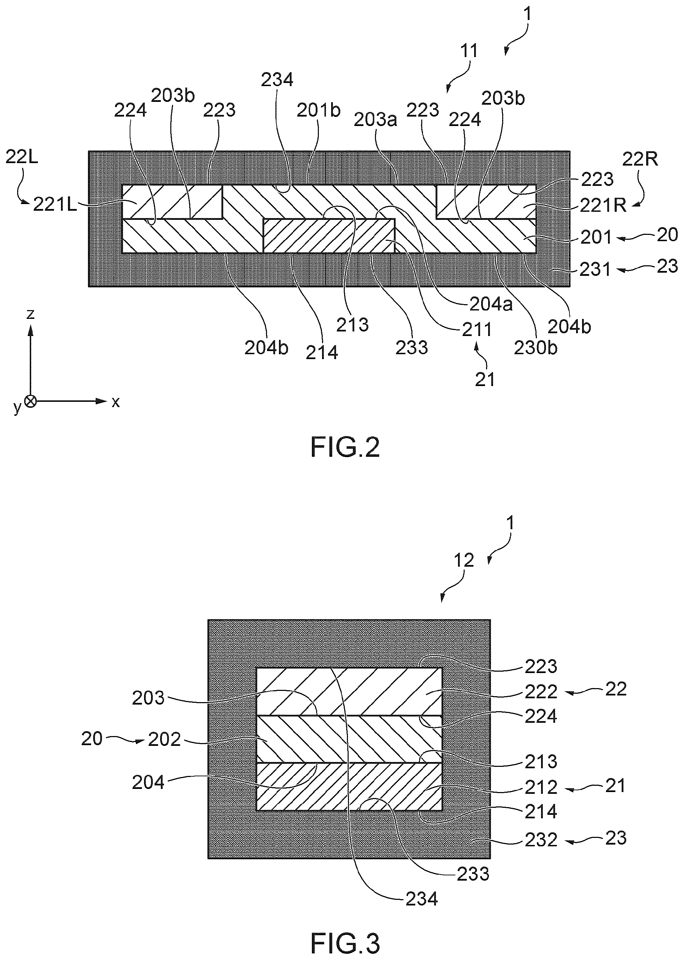

Fig. 1 is a plan view schematically showing a configuration of the electrostatic capacitance sensor 1 according to the embodiment of the present invention. Fig. 2 is a sectional view taken along line A-A in the electrostatic capacitance sensor 1. Fig. 3 is a sectional view taken along line B-B in the electrostatic capacitance sensor 1. Fig. 2 is a sectional view for showing a layer configuration of a wiring section 11 in the electrostatic capacitance sensor 1. Fig. 3 is a sectional view for showing a layer configuration of an electrostatic capacitance section 12 in the electrostatic capacitance sensor 1.

In the following explanation, a lateral direction in the plan view shown in Fig. 1, of the electrostatic capacitance sensor 1 (lateral direction in the sectional view shown in Fig. 2) is defined as an x-axis direction, a vertical direction in the plan view shown in Fig. 1, which is a direction orthogonal to an x axis (direction that penetrates through the drawing in Fig. 2) is defined as a y-axis direction, and a direction that is orthogonal to the x axis and a y axis, that is, a direction that penetrates through the drawing in the plan view shown in Fig. 1 (vertical direction in Fig. 2) is defined as a z-axis direction (a height direction, a stacking direction). In the following explanation, directions indicated by arrows of the x, y, and z axes in Fig. 1 and the like are defined as + directions, and opposite directions to the directions indicated by the + directions are defined as - directions. In the following explanation, a direction of an xy plane that is a plane perpendicular to the stacking direction is referred to as a surface direction. Further, in the following explanation, surfaces shown in the plan view shown in Fig. 1 are all front surfaces, and surfaces on an opposite side of the front surfaces are back surfaces. The sectional view shown in Fig. 2 is an xz sectional view of the electrostatic capacitance sensor 1 according to the above definition. Furthermore, in the following explanation, all sectional views of the electrostatic capacitance sensor 1 are xz sectional views unless otherwise specified.

As shown in Figs. 1, 2, and 3, the electrostatic capacitance sensor 1 according to the present embodiment includes a dielectric layer 20, a ground layer 21 as a first electrode layer, a voltage application layer 22 as a second electrode layer, and an insulation layer 23. The electrostatic capacitance sensor 1 includes the wiring section 11, and the electrostatic capacitance section 12. In the wiring section 11, the ground layer 21 and the voltage application layer 22 are stacked with the dielectric layer 20 so that positions in the stacking direction do not overlap with each other inside of the insulation layer 23. The electrostatic capacitance section 12 is a section that extends from an end portion 111 in the surface direction of the wiring section 11. In the electrostatic capacitance section 12, the ground layer 21, and the voltage application layer 22 are stacked with the dielectric layer 20 therebetween, inside of the insulation layer 23. Hereinafter, the configuration and an operation of the electrostatic capacitance sensor 1 will be specifically described.

### [Configurations of Wiring Section and Electrostatic Capacitance Section]

As shown in Fig. 1, in the electrostatic capacitance sensor 1, for the single wiring section 11, a plurality of electrostatic capacitance sections 12 are provided at end portions 111 of the wiring section 11. In Fig. 1, broken lines are lines that are provided for showing boundaries between the wiring section 11 and the electrostatic capacitance sections 12. Specifically, the electrostatic capacitance sections 12 extend, for example, outward, that is, in a direction to be away from the wiring section 11, from the end portions 111 in a left-right direction of the wiring section 11. In the electrostatic capacitance sensor 1, the wiring section 11 and the electrostatic capacitance sections 12 are integrally formed.

The plurality of electrostatic capacitance sections 12 are disposed at the end portions 111 on both sides in the left-right direction in Fig. 1, of the wiring section 11, at predetermined intervals in the y-axis direction in the surface direction like comb teeth, for example. In the following explanation, among the plurality of electrostatic capacitance sections 12, those provided on a left side with respect to the wiring section 11 are also referred to as first electrostatic capacitance sections 12L. Furthermore, among the plurality of electrostatic capacitance sections 12, those provided on a right side with respect to the wiring section 11 are also referred to as second electrostatic capacitance sections 12R. The plurality of electrostatic capacitance sections 12 may be disposed such that the first electrostatic capacitance sections 12L and the second electrostatic capacitance sections 12R are disposed symmetrically with the wiring section 11 at a center in the surface direction of the electrostatic capacitance sensor 1, for example. The plurality of the electrostatic capacitance sections 12 may each extend at a predetermined angle from the end portion 111 in the surface direction of the wiring section 11. In Fig. 1, in the electrostatic capacitance sections 12, for example, the first electrostatic capacitance sections 12L extend in the -x-axis direction and the y-axis direction, and the second electrostatic capacitance sections 12R extend in the x-axis direction and the y-axis direction, respectively.

Note that disposition of the electrostatic capacitance sections 12 is not limited to the disposition in which they are symmetrical with the wiring section 11 at the center, but disposition intervals and the number of dispositions of the electrostatic capacitance sections 12 may be different on the left and right. Further, the disposition intervals of the electrostatic capacitance sections 12 may not be constant intervals. Furthermore, in the electrostatic capacitance sensor 1, the number of the electrostatic capacitance sections 12 is not particularly limited. Further, angles between the end portions 111 of the wiring section 11 and the electrostatic capacitance sections 12 are not particularly limited. Furthermore, there may be a point where the angle changes between the wiring section 11 and the electrostatic capacitance sections 12.

### [Configurations of Dielectric Layer, Ground Layer, Voltage Application Layer, and Insulation Layer]

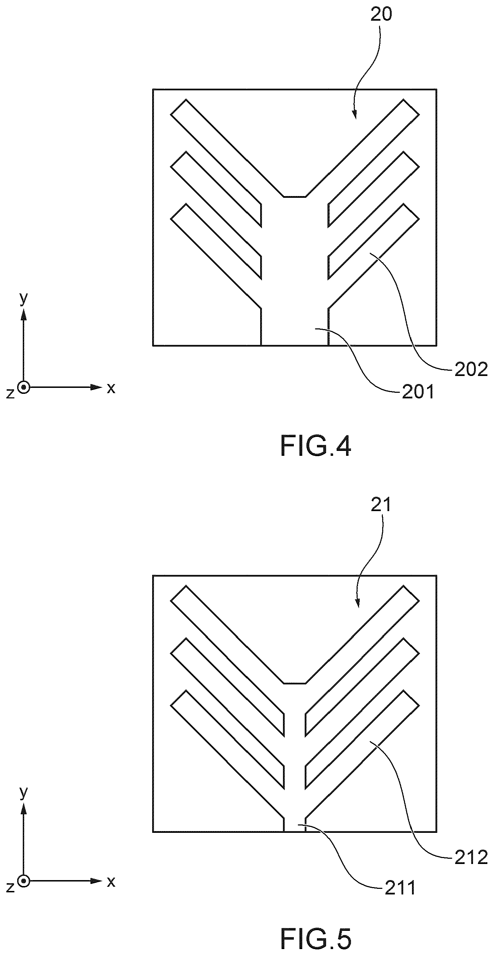

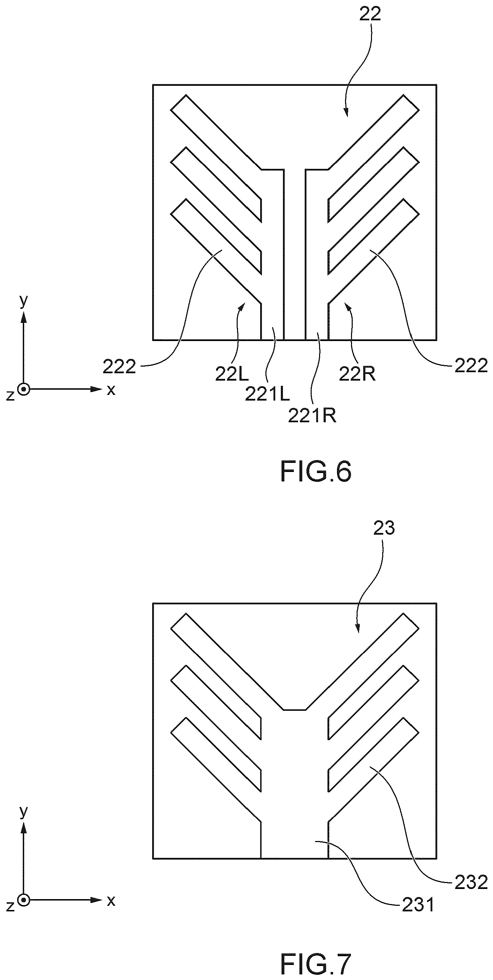

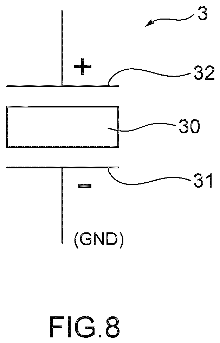

Fig. 4 is a plan view showing the dielectric layer 20 in the electrostatic capacitance sensor 1. Fig. 5 is a plan view showing the ground layer 21 in the electrostatic capacitance sensor 1. Fig. 6 is a plan view showing the voltage application layer 22 in the electrostatic capacitance sensor 1. Fig. 7 is a plan view showing the insulation layer 23 in the electrostatic capacitance sensor 1. Fig. 8 is a schematic view showing a capacitor 3 equivalent to the electrostatic capacitance sensor 1.

Referring to Fig. 4 to Fig. 8, configurations of the dielectric layer 20, the ground layer 21, the voltage application layer 22, and the insulation layer 23 in the electrostatic capacitance sensor 1 will be described.

The dielectric layer 20 has a function of a dielectric 30 in the capacitor 3 shown in Fig. 8. As described above, the dielectric layer 20 is stacked with the ground layer 21, and the voltage application layer 22 inside of a region surrounded by the insulation layer 23, in both the wiring section 11 and the electrostatic capacitance sections 12. Consequently, as shown in Fig. 4, a planar shape of the dielectric layer 20 has a same or substantially same shape as a planar shape of the electrostatic capacitance sensor 1 shown in Fig. 1. The dielectric layer 20 has a first dielectric section 201 that is positioned in the wiring section 11 in the electrostatic capacitance sensor 1 and second dielectric sections 202 that are positioned in the electrostatic capacitance sections 12.

The dielectric layer 20 is a sheet-like member in which the first dielectric section 201 and the second dielectric sections 202 are integrally formed from an elastomer composition. The dielectric layer 20 can be reversibly deformed so that areas of front and back surfaces thereof change. Further, the dielectric layer 20 has a relatively large relative dielectric constant, for example, 5 or more (measurement frequency 100 Hz). As the elastomer composition, those containing an elastomer and, as necessary, other optional ingredients such as dielectric particles are cited. Examples of elastomer include a natural rubber, isoprene rubber, nitrile rubber (NBR), ethylene propylene rubber (EPDM), styrene butadiene rubber (SBR), butadiene rubber (BR), chloroprene rubber (CR), silicone rubber, fluororubber, acrylic rubber, hydrogenated nitrile rubber, urethane rubber, and the like. These rubbers may be used alone, or two or more rubbers may be used in combination.

The ground layer 21 has a function of an electrode 31 on a negative side in the capacitor 3 shown in Fig. 8. The voltage application layer 22 has a function of an electrode 32 on a positive side in the capacitor 3 shown in Fig. 8. As described above, the ground layer 21, and the voltage application layer 22 overlap with each other in the electrostatic capacitance section 12. On the other hand, the ground layer 21, and the voltage application layer 22 do not overlap with each other in the height direction and are disposed in different positions in the surface direction, in the wiring section 11. Consequently, as shown in Fig. 5, in the ground layer 21, a planar shape of a first ground section 211 that is a section forming the wiring section 11 has a shape in which a dimension in the left-right direction (width) is small, unlike the planar shape of the wiring section 11 in the electrostatic capacitance sensor 1 shown in Fig. 1. On the other hand, in the ground layer 21, the planar shape of a second ground section 212 that is a section forming the electrostatic capacitance section 12 has a same or substantially same shape as the planar shape of the electrostatic capacitance section 12 in the electrostatic capacitance sensor 1 shown in Fig. 1.

In order to prevent the voltage application layer 22 from overlapping with the ground layer 21 in a spot forming the wiring section 11, the voltage application layer 22 is divided into a first constituent section 22L that is a part on a left side in plan view, and a second constituent section 22R that is a part on a right side in plan view with the spot forming the wiring section 11 at a center, as shown in Fig. 6.

In the first constituent section 22L of the voltage application layer 22, a first voltage application section 221L that is a section forming the wiring section 11 is positioned on a left side of the first ground section 211 of the ground layer 21 shown in Fig. 5, and has a shape that does not overlap with the first ground section 211. In other words, the first voltage application section 221L has a planar shape corresponding to a section on the left side, of the voltage application layer 22 of the wiring section 11 in Fig. 2. On the other hand, in the first constituent section 22L of the voltage application layer 22, a planar shape of a second voltage application section 222 that is a section forming the electrostatic capacitance section 12 has a same or substantially same shape as the planar shape of the electrostatic capacitance section 12 in the electrostatic capacitance sensor 1 shown in Fig. 1.

In the second constituent section 22R of the voltage application layer 22, a first voltage application section 221R that is a section forming the wiring section 11 is positioned on a right side of the first ground section 211 of the ground layer 21 shown in Fig. 5 and has a shape that does not overlap with the first ground section 211. In other words, the first voltage application section 221R has a planar shape corresponding to a portion on the right side, of the voltage application layer 22 of the wiring section 11 in Fig. 2. On the other hand, in the second constituent section 22R of the voltage application layer 22, a planar shape of the second voltage application section 222 that is a section forming the electrostatic capacitance section 12 has a same or substantially same shape as the planar shape of the electrostatic capacitance section 12 in the electrostatic capacitance sensor 1 shown in Fig. 1.

The ground layer 21 and the voltage application layer 22 are formed of, for example, an elastomer composition containing a conductive material such as carbon black, carbon nanotubes, silver nanoparticles, or other conductive particles.

The insulation layer 23 is provided outside of the ground layer 21, the dielectric layer 20, and the voltage application layer 22, in both the wiring section 11 and the electrostatic capacitance section 12. Consequently, as shown in Fig. 7, a planar shape of the insulation layer 23 has a same or substantially same shape as the planar shape of the electrostatic capacitance sensor 1 shown in Fig. 1. Furthermore, the insulation layer 23 covers top and bottom surfaces and side surfaces of the ground layer 21, the dielectric layer 20, and the voltage application layer 22, in both the wiring section 11, and the electrostatic capacitance section 12. The insulation layer 23 has a first insulation section 231 that is positioned at the wiring section 11 in the electrostatic capacitance sensor 1, and a second insulation section 232 that is positioned at the electrostatic capacitance section 12.

The insulation layer 23 electrically insulates the ground layer 21 and the like from an outside. Furthermore, the insulation layer 23 can enhance strength and durability of the electrostatic capacitance sensor 1. For the insulation layer 23, a same elastomer composition as the material also forming the dielectric layer 20, or the like can be used.

Thereafter, disposition of the respective layers that form the wiring section 11 and the electrostatic capacitance section 12 will be described. As shown in Fig 2, the wiring section 11 in the electrostatic capacitance sensor 1 is a region that is surrounded by the insulation layer 23 that is disposed on upper and lower end portions and side surfaces, and in the height direction, that is, in the z-axis direction, the ground layer 21 and the voltage application layer 22 are disposed so as not to overlap with each other. In other words, as shown in Figs. 5 and 6, in the wiring section 11, the first ground section 211 of the ground layer 21, and the first voltage application sections 221L and 221R of the voltage application layer 22 are disposed at different positions in the surface direction. In the wiring section 11, a part of the first dielectric section 201 of the dielectric layer 20 overlaps with the first ground section 211 of the ground layer 21 in the height direction. Furthermore, another part of the first dielectric section 201 overlaps with the first voltage application sections 221L and 221R of the voltage application layer 22 in the height direction. In other words, in the wiring section 11, a part of the first dielectric section 201 of the dielectric layer 20 is adjacent to the first ground section 211 of the ground layer 21, in the surface direction, and another part is adjacent to the first voltage application sections 221L and 221R of the voltage application layer 22.

In the wiring section 11, in the first dielectric section 201 of the dielectric layer 20, the ground layer 21 and the insulation layer 23 are stacked on one surface, that is, a back surface 204. Specifically, in the wiring section 11, a central portion 204a in the surface direction in a back surface 204 of the first dielectric section 201 of the dielectric layer 20 is stacked to face a front surface 213 of the first ground section 211 of the ground layer 21. Furthermore, in the wiring section 11, an outer periphery side portion 204b in the surface direction in the back surface 204 of the first dielectric section 201 of the dielectric layer 20 is stacked to face a front surface 233 of the first insulation section 231 in the insulation layer 23.

In the wiring section 11, in the dielectric layer 20, the voltage application layer 22 and the insulation layer 23 are stacked on another surface, that is, a front surface 203. Specifically, in the wiring section 11, a central portion 203a in the surface direction in the front surface 203 of the first dielectric section 201 of the dielectric layer 20 is stacked to face a back surface 234 of the first insulation section 231 in the insulation layer 23. Furthermore, in the wiring section 11, an outer periphery side portion 203b in the surface direction in the front surface 203 of the first dielectric section 201 of the dielectric layer 20 is stacked to face a back surface 224 of the first voltage application section 221 of the voltage application layer 22.

In the wiring section 11, a back surface 214 of the first ground section 211 is stacked to face the front surface 233 of the first insulation section 231. Furthermore, in the wiring section 11, front surfaces 223 of the first voltage application sections 221L and 221R face a back surface 234 of the first insulation section 231.

As shown in Fig. 3, the electrostatic capacitance section 12 in the electrostatic capacitance sensor 1 is a region surrounded by the insulation layer 23 disposed on upper and lower end portions, and side surfaces, and in order from a bottom in the height direction, that is, in order from -z-axis direction toward the +z-axis direction in the z-axis direction, the ground layer 21, the dielectric layer 20, and the voltage application layer 22 are stacked, unlike the aforementioned wiring section 11. That is so say, in the region surrounded by the insulation layer 23, of the electrostatic capacitance section 12, the second ground section 212 of the ground layer 21, the second dielectric section 202 of the dielectric layer 20, and the second voltage application section 222 of the voltage application layer 22 are stacked by overlapping with each other. Specifically, a front surface 233 of the second insulation section 232 of the insulation layer 23 faces a back surface 214 of the second ground section 212 of the ground layer 21. The front surface 213 of the second ground section 212 faces the back surface 204 of the second dielectric section 202 of the dielectric layer 20. The front surface 203 of the second dielectric section 202 faces a back surface 224 of the second voltage application section 222 of the voltage application layer 22. The front surface 223 of the second voltage application section 222 faces the back surface 234 of the second insulation section 232.

The electrostatic capacitance sensor 1 can be manufactured by the following steps, for example. The electrostatic capacitance sensor 1 can be manufactured by performing, in order from a lower side, a step (1) of producing the insulation layer 23, a step (2) of coating the insulation layer 23 with an elastomer composition, and producing the ground layer 21, a step (3) of coating the ground layer 21 with the elastomer composition, and producing the dielectric layer 20, a step (4) of coating the dielectric layer 20 with the elastomer composition, and producing the voltage application layer 22, and a step (5) of producing the insulation layer 23 on the voltage application layer 22. In the above-described steps, the ground layer 21 and the voltage application layer 22 that are produced in the step (2) and the step (4) have different stacking structures between the wiring section 11 and the electrostatic capacitance section 12, and therefore, these layers can be produced after the spots where the layers are not formed are masked according to the respective shapes. Production of the respective layers can be performed by, for example, appropriate methods such as a spray coat screen printing method, and an inkjet printing method.

### [Operation of Electrostatic Capacitance Sensor]

Thereafter, an operation of the electrostatic capacitance sensor 1 including the configuration described above will be described.

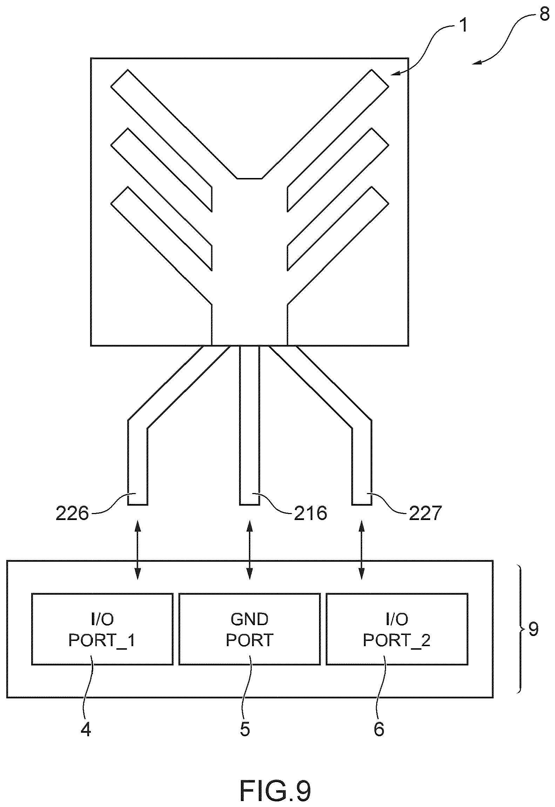

Fig. 9 is a schematic diagram showing one example of an electrostatic capacitance measurement circuit 8 using the electrostatic capacitance sensor 1. As shown in Fig. 9, the electrostatic capacitance measurement circuit 8 is configured by the electrostatic capacitance sensor 1 and a control IC (Integrated Circuit) 9.

The electrostatic capacitance sensor 1 includes a negative side electrode section 216 that extends from the ground layer 21, a positive side electrode section 226 that extends from 224 of the voltage application layer 22, and a positive side electrode section 227 that extends from 225 of the voltage application layer 22, in addition to the configuration of the electrostatic capacitance sensor 1 described above. Note that the negative side electrode section 216, and the positive side electrode sections 226 and 227 are not limited to the example in which they are formed by extending from the electrostatic capacitance sensor 1 as shown in Fig. 9 but may be connected by connectors for thin boards, for example.

The control IC 9 has I/O (Input/Output) ports 4 and 6, and a ground port 5. The I/O ports 4 and 6 are electrically connected to the positive side electrode sections 226 and 227. The ground port 5 is electrically connected to the negative side electrode section 216. Note that in the electrostatic capacitance measurement circuit 8, a switching circuit such as a MOSFET (Metal-Oxide-Semiconductor Field-Effect Transistor) may be provided between the electrostatic capacitance sensor 1 and the control IC 9.

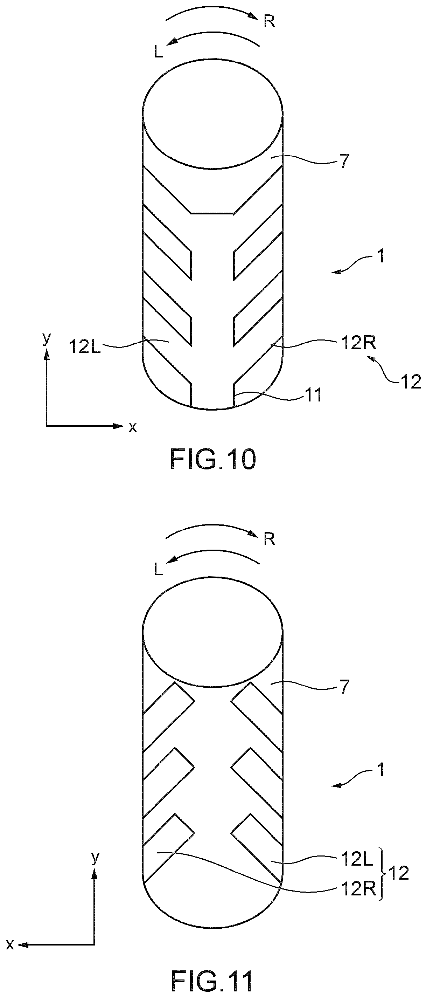

Fig. 10 is a schematic view showing the electrostatic capacitance sensor 1 in a state in which it is attached to an object 7 to be detected. Fig. 10 is a view of the electrostatic capacitance sensor 1 attached to the object 7 to be detected seen from a side where the wiring section 11 is provided. Fig. 11 is another schematic view showing the electrostatic capacitance sensor 1 in the state in which it is attached to the object 7 to be detected. Fig. 11 is a view of the electrostatic capacitance sensor 1 attached to the object 7 to be detected seen from a tip end side of the electrostatic capacitance sections 12.

As shown in Fig. 10 and Fig. 11, the electrostatic capacitance sensor 1 is attached to a front surface of the object 7 to be detected to detect torsion that occurs to the object 7 to be detected such as a thin and long round bar. Specifically, the electrostatic capacitance sensor 1 is attached so that the wiring section 11 is parallel to a longitudinal direction of the object 7 to be detected so that the electrostatic capacitance sections 12 are disposed obliquely (at an angle) to the longitudinal direction that is an axial direction of the object 7 to be detected. The electrostatic capacitance sensor 1 is charged by a voltage being applied thereto from the I/O ports 4 and 6 of the control IC 9 in the electrostatic capacitance measurement circuit 8 shown in Fig. 9, and measures the torsion of the object 7 to be detected.

As shown in Fig. 10 and Fig. 11, the electrostatic capacitance sensor 1 measures with the electrostatic capacitance sections 12 attached obliquely to the axial direction of the object 7 to be detected. In the electrostatic capacitance sensor 1, the wiring section 11, and the electrostatic capacitance sections 12 that extend from the end portion 111 in the surface direction of the wiring section 11 to detect torsion are provided at the different positions in the surface direction. Consequently, with the electrostatic capacitance sensor 1, it is possible to attach only the electrostatic capacitance sections 12 obliquely to the axial direction of the object 7 to be detected, whereby noise components due to the wiring section 11 are not contained in a detected signal, and it is possible to detect highly precise torsion.

In the electrostatic capacitance sensor 1, the plurality of electrostatic capacitance sections 12 extend to outside from the respective end portions 111 in the left direction and the right direction of the wiring section 11. In clockwise torsion in an R direction, an electrostatic capacitance value in a first electrostatic capacitance section 12L increases more than that in a second electrostatic capacitance section 12R, and in counterclockwise torsion in an L direction, an electrostatic capacitance value of the second electrostatic capacitance section 12R increases more than that in the first electrostatic capacitance section 12L. Consequently, with the electrostatic capacitance sensor 1, it is possible to determine a direction of torsion (clockwise R or counterclockwise L with respect to a rotation direction of the object 7 to be detected) by comparing the electrostatic capacitance values of the first electrostatic capacitance section 12L and the second electrostatic capacitance section 12R, when detecting the torsion that occurs to the object 7 to be detected.

Since in the electrostatic capacitance sensor 1, the electrostatic capacitance section 12 extends at an angle from the wiring section 11, it is possible to reduce wear and deterioration due to an external force, by reducing the thickness of the sensor elements by avoiding the components (sensor elements) of the sensor overlapping with each other, when the object 7 to be detected has a high ratio of the height dimension to the diameter dimension like a round bar.

Furthermore, with the electrostatic capacitance sensor 1, by simplifying the stacking structure, it is possible to improve attachability to the object 7 to be detected as a result of improvement in processibility, or reduction in thickness of the sensor elements.

In the electrostatic capacitance sensor 1, the plurality of electrostatic capacitance sections 12 are provided for the one wiring section 11. With such a configuration, when the electrostatic capacitance sensor 1 is attached to the object 7 to be detected like a round bar as shown in Fig. 10 and Fig. 11, it is possible to detect torsion at different positions in the longitudinal direction of the object 7 to be detected, and therefore, it is possible to realize more precise detection of torsion.

In the electrostatic capacitance sensor 1, the plurality of electrostatic capacitance sections 12, specifically, the first electrostatic capacitance sections 12L and the second electrostatic capacitance sections 12R are disposed symmetrically with the wiring section 11 at the center in the surface direction. With such a configuration, the electrostatic capacitance sensor 1 can detect torsion uniformly regardless of the directions of torsion relative to the rotation direction of the object 7 to be detected.

In the electrostatic capacitance sensor 1, the electrostatic capacitance sections 12 extend at an angle from the end portion 111 in the surface direction of the wiring section 11, and therefore it is possible to detect differences in torsion due to differences in the longitudinal direction of the object 7 to be detected when attaching it to the object 7 to be detected like a round bar. Furthermore, since the electrostatic capacitance sections 12 extend at an angle from the end portion 111 in the surface direction of the wiring section 11, it is possible to avoid the components (sensor elements) of the sensor overlapping with each other.

In the electrostatic capacitance sensor 1, in the electrostatic capacitance section 12, the dielectric layer 20 has the ground layer 21 stacked on one surface, for example, the front surface, and the voltage application layer 22 stacked on the other surface, for example, the back surface. Furthermore, in the wiring section 11, the dielectric layer 20 has the ground layer 21 and the insulation layer 23 stacked on one surface, for example, the front surface, and has the voltage application layer 22 and the insulation layer 23 stacked on the other surface, for example, on the back surface. As above, since the layers that are stacked on the dielectric layer 20 are different in the wiring section 11 and the electrostatic capacitance section 12, the stacking structure in the wiring section 11 can be simplified, and therefore it is possible to improve processibility, reduction in thickness in the stacking direction, and attachability to the object 7 to be detected.

Since the electrostatic capacitance sections 12 are each disposed to be at an angle to the longitudinal direction of the object 7 to be detected in the electrostatic capacitance sensor 1, it is possible to reliably detect torsion to the rotation direction of the object 7 to be detected.

Consequently, with the electrostatic capacitance sensor 1, it is possible to simplify the structure in which a plurality of sensor elements are formed into a same sheet shape.

In addition, those skilled in the art can appropriately modify the present invention in accordance with conventionally known knowledge. As long as such modifications still include the configuration of the present invention, they are of course included in the scope of the present invention.

For example, in the electrostatic capacitance sensor 1 described above, the example in which the first electrode layer is the ground layer 21, and the second electrode layer is the voltage application layer 22 is described, but the first electrode layer may be the voltage application layer 22, and the second electrode layer may be the ground layer 21.

For example, in the electrostatic capacitance sensor 1 described above, the example in which the insulation layer 23 covers the top and bottom surfaces, and the side surfaces of the dielectric layer 20, the ground layer 21, and the voltage application layer 22 is described, but the insulation layer 23 may cover only the top and bottom surfaces of the dielectric layer 20, the ground layer 21, and the voltage application layer 22.

### List of Reference Signs

1 electrostatic capacitance sensor,
3 capacitor,
4, 6 I/O (Input/Output) port,
5 ground port,
7 object to be detected,
8 electrostatic capacitance measurement circuit,
11 wiring section,
12 electrostatic capacitance section,
12L first electrostatic capacitance section,
12R second electrostatic capacitance section, 20 dielectric layer,
21 ground layer,
22 voltage application layer,
22L first constituent section,
22R second constituent section,
23 insulation layer,
30 dielectric,
31 electrode on negative side,
32 electrode on positive side,
111 end portion,
201 first dielectric section,
202 second dielectric section,
203 front surface,
203a central portion,
203b outer periphery side portion,
204 back surface,
204a central portion,
204b outer periphery side portion,
211 first ground section,
212 second ground section,
213 front surface,
214 back surface,
216 negative side electrode section,
221 first voltage application section,
221L first voltage application section,
221R first voltage application section,
222 second voltage application section,
223 front surface,
224 back surface,
226 positive side electrode section,
227 positive side electrode section,
231 first insulation section,
232 second insulation section,
233 front surface,
234 back surface

## Claims

1. An electrostatic capacitance sensor including a dielectric layer, a first electrode layer, and a second electrode layer, the electrostatic capacitance sensor comprising:
a wiring section in which the first electrode layer and the second electrode layer are stacked with the dielectric layer so that positions thereof in a stacking direction do not overlap with each other; and
an electrostatic capacitance section that is a section extending from an end portion in a surface direction of the wiring section, in which the first electrode layer and the second electrode layer are stacked with the dielectric layer between them.

2. The electrostatic capacitance sensor according to claim 1, wherein
a plurality of the electrostatic capacitance sections are provided for the one wiring section.

3. The electrostatic capacitance sensor according to claim 2, wherein
the plurality of the electrostatic capacitance sections are disposed symmetrically, with the wiring section at a center in the surface direction.

4. The electrostatic capacitance sensor according to claim 1, wherein
the electrostatic capacitance section extends at an angle from the end portion in the surface direction of the wiring section.

5. The electrostatic capacitance sensor according to claim 1, wherein
in the wiring section, the dielectric layer has the first electrode layer stacked on one surface, and has the second electrode layer stacked on another surface.

6. The electrostatic capacitance sensor according to claim 1, wherein
the electrostatic capacitance section is disposed at an angle to a longitudinal direction of an object to be detected.
